Europäisches Patentamt

European Patent Office

Office européen des brevets

(11) Numéro de publication: **0 270 396 B1**

(19)

## (12) FASCICULE DE BREVET EUROPEEN

(45) Date de publication de fascicule du brevet:
**22.01.92**

(51) Int. Cl.⁵: **G08G 1/015**

(21) Numéro de dépôt: **87402366.6**

(22) Date de dépôt: **21.10.87**

(54) **Dispositif de mesure de largeur d'une zone de roulement sur une voie.**

(30) Priorité: **31.10.86 FR 8615233**

(43) Date de publication de la demande:
**08.06.88 Bulletin 88/23**

(45) Mention de la délivrance du brevet:
**22.01.92 Bulletin 92/04**

(84) Etats contractants désignés:
**AT BE CH DE ES GB GR IT LI LU NL SE**

(56) Documents cités:
FR-A- 989 174          FR-A- 1 042 222
FR-A- 2 490 373        FR-A- 2 549 625
US-A- 3 748 443        US-A- 3 835 449

(73) Titulaire: **ELECTRONIOUE SERGE DASSAULT**
**55, quai Marcel Dassault**
**F-92214 Saint-Cloud(FR)**

(72) Inventeur: **Glize, Jean-Pierre**
**Place Royale**
**F-40240 La Bastide D'Armagnac(FR)**

(74) Mandataire: **Plaçais, Jean-Yves et al**
**Cabinet Netter, 40, rue Vignon**
**F-75009 Paris(FR)**

Rank Xerox (UK) Business Services

EP 0 270 396 B1

## Description

La présente invention a pour objet un dispositif servant à mesurer la largeur d'une zone de roulement sur une voie. Plus particulièrement, elle trouve une application dans la mesure de la largeur d'un pneu d'un véhicule qui passe sur une voie de circulation à des fins de classification de ce véhicule.

Un tel dispositif est décrit dans le brevet US-A 3 835 449.

On connaît des dispositifs qui mesurent au sol le poids et la vitesse d'un véhicule qui passe sur une route. Généralement, de tels dispositifs comprennent un capteur sensible à la pression, du genre piézo-électrique, c'est-à-dire possédant la propriété de délivrer une différence de potentiel proportionnelle à la pression exercée sur le capteur. Le capteur est noyé dans le sol perpendiculairement à la direction de la voie et au voisinage inférieur de la zone de roulement du véhicule. Le capteur est relié à des circuits électriques mesurant la différence de potentiel délivrée par le capteur.

De tels dispositifs ne permettent pas de mesurer avec précision la largeur d'un pneu d'un véhicule qui passe.

L'invention a justement pour objet de remédier à cet inconvénient. A cette fin, elle propose un dispositif permettant de mesurer avec précision la largeur d'une zone de roulement sur une voie. Ce résultat est obtenu en logeant le capteur dans un tube cylindrique oblique par rapport à la direction de la voie et dont la paroi possède des évidements distribués sur le côté exposé à la zone de roulement.

De façon plus précise, l'invention a pour objet un dispositif de mesure de largeur d'une zone de roulement sur une voie du type utilisant un capteur sensible à la pression, noyé dans la voie au voisinage inférieur de la zone de roulement du véhicule et relié à des circuits électriques de mesure. Selon la principale caractéristique du dispositif de l'invention, le capteur est logé dans un tube cylindrique à paroi indéformable, le tube étant oblique par rapport à la direction de la voie, la paroi du tube possédant des évidements distribués sur le côté exposé à la surface de roulement et les circuits électriques de mesure étant des compteurs d'impulsions électriques.

Selon un mode de réalisation préféré du dispositif de l'invention, les évidements sont distribués périodiquement au moins localement.

Avantageusement, les évidements périodiques sont de forme semi-circulaire.

Conformément à une autre caractéristique de l'invention, l'angle formé par le tube cylindrique et la direction de la voie est compris entre 5˚ et 85˚.

L'angle formé par le tube cylindrique et la direction de la voie est de préférence compris entre 15˚ et 75˚.

Selon une autre caractéristique de l'invention, le tube cylindrique est noyé dans un matériau apte à transmettre les efforts qui lui sont appliqués.

Avantageusement, le matériau est de la résine.

D'autres caractéristiques et avantages de l'invention ressortiront de la description détaillée donnée ci-après et des dessins annexés, dans lesquels :

- la figure 1 représente une vue schématique en coupe longitudinale, selon la longueur du tube cylindrique, d'un mode particulier de réalisation selon l'invention;
- la figure 2 représente une vue schématique en coupe transversale, selon la section du tube cylindrique, des éléments constitutifs essentiels du dispositif selon l'invention; et
- la figure 3 représente une vue de dessus de la voie de circulation dans laquelle est noyé le capteur selon l'invention.

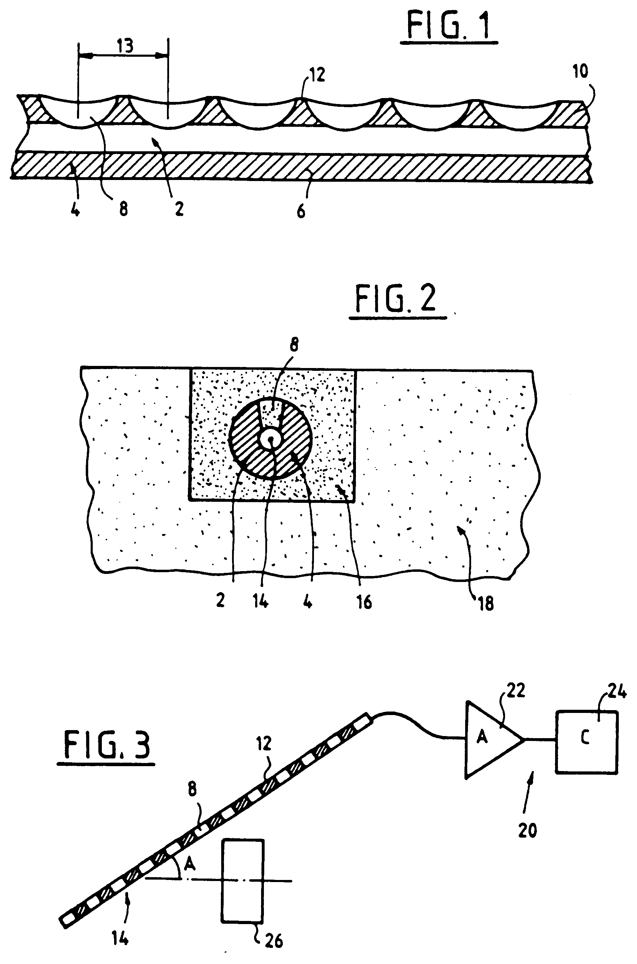

On a représenté sur la figure 1 le logement 2 dans lequel sera introduit le capteur selon l'invention. Le logement 2 est délimité par un tube cylindrique 4 dont la paroi 6 est indéformable. La paroi 6 possède des évidements 8 distribués sur le côté 10 exposé à la surface de roulement que l'on décrira ci-après. Avantageusement, les évidements 8 sont distribués périodiquement selon un facteur de forme longitudinal. De préférence, les évidements 8 sont de forme semi-circulaire. Le côté 10 de la paroi 6 comprend donc en alternance des évidements 8 et des portions 12 de la paroi 6. La distance 13 entre le milieu d'un évidement 8 et le milieu de l'évidement 8 suivant définit le pas de la mesure et détermine la précision absolue de la mesure.

On a représenté sur la figure 2 une vue schématique en coupe transversale selon la section du tube cylindrique 4 des éléments essentiels constitutifs du dispositif selon l'invention.

L'ensemble constitué des éléments 2, 4 et 8 décrit en référence à la figure 1 reçoit le capteur 14. Le capteur 14 est de forme cylindrique. La principale caractéristique du capteur 14 est sa sensibilité à la pression. Il est par exemple du genre piézo-électrique comme ceux vendus par la Société "Thermocoax".

Le coté 10 exposé à la surface de roulement comprend donc des zones 8 sensibles à la pression et des zones 12 insensibles à la pression.

Avantageusement, l'ensemble constitué des éléments 2, 4, 8 et 14 est noyé dans un matériau 16 apte à transmettre les efforts qui lui sont appliqués. De préférence, le matériau 16 est de la résine. Le matériau 16 peut etre inséré dans une rainure percée dans, par exemple, une voie de circulation de véhicule 18.

On a représenté sur la figure 3 une vue de dessus de la voie de circulation dans laquelle est noyé le capteur 14 selon l'invention. On voit que le capteur 14, constitué des portions sensibles 8 et des portions insensibles 12, est disposé obliquement par rapport à la direction de la voie de circulation du véhicule 26. L'angle A formé par le capteur 14 et la direction de la voie de circulation est compris entre 5° et 85°. De préférence, l'angle A est compris entre 15° et 75°. A titre d'exemple, on a représenté un angle de 45°. Le capteur 14 est relié à des circuits électriques de mesure 20 constitués d'un amplificateur 22 et d'un compteur d'impulsions électriques 24.

Le dispositif qui vient d'être décrit en se référant aux figures 1 à 3 fonctionne de la façon suivante.

Lors d'un passage d'un véhicule 26, le pneu dont on veut déterminer la largeur actionne successivement les zones actives 8 du capteur 14. Il s'ensuit une succession de signaux électriques dont le nombre correspond au nombre d'éléments excités. Ces signaux électriques sont transmis au compteur 24.

La largeur du pneu est déduite du nombre d'éléments excités et par conséquent du nombre d'impulsions électriques transmises au compteur, du pas de mesure 13 et de l'angle A formé par le capteur 16 et la direction de la voie de circulation du véhicule 26.

**Revendications**

1. Dispositif de mesure de largeur d'une zone de roulement sur une voie du type utilisant un capteur (14) sensible à la pression, noyé dans la voie au voisinage inférieur de la zone de roulement du véhicule et relié à des circuits électriques de mesure (20), caractérisé en ce que le capteur (14) est logé dans un tube cylindrique à paroi indéformable (4), le tube (4) étant oblique par rapport à la direction de la voie, la paroi (6) du tube possédant des évidements (8) distribués sur le côté (10) exposé à la surface de roulement et les circuits électriques de mesure (20) étant des compteurs d'impulsions électriques (24).

2. Dispositif selon la revendication 1, caractérisé en ce que les évidements (8) sont distribués périodiquement au moins localement.

3. Dispositif selon les revendications 1 et 2, caractérisé en ce que les évidements périodiques (8) sont de forme semicirculaire.

4. Dispositif selon les revendications 1 à 3, caractérisé en ce que l'angle A formé par le tube cylindrique (4) et la direction de la voie est compris entre 5° et 85°.

5. Dispositif selon les revendications 1 à 4, caractérisé en ce que l'angle A formé par le tube cylindrique (4) et la direction de la voie est de préférence compris entre 15° et 75°.

6. Dispositif selon les revendications 1 à 5, caractérisé en ce que le tube cylindrique (4) est noyé dans un matériau (16) apte à transmettre les efforts qui lui sont appliqués.

7. Dispositif selon la revendication 6, caractérisé en ce que le matériau (16) est de la résine.

**Claims**

1. Device for measuring the width of a rolling zone on a road, of the type using a pressure sensitive pick-up (14), buried in the road in the lower vicinity of the rolling zone of the vehicle and connected to electrical measuring circuits (20), characterized in that the pick-up (14) is housed in a cylindrical tube (4) having an indeformable wall, the tube (4) being oblique to the direction of the road, the wall (6) of the tube comprising recesses (8) distributed along the side (10) exposed to the rolling surface and the electrical measuring circuits (20)being electrical pulse counters (24).

2. Device according to Claim 1, characterized in that the recesses (8) are distributed periodically, at least locally.

3. Device according to Claims 1 and 2, characterized in that the periodic recesses (8) are of semicircular form.

4. Device according to Claims 1 to 3, characterized in that the angle A formed between the cylindrical tube (4) and the direction of the road is from 5° to 85°.

5. Device according to Claims 1 to 4, characterized in that the angle A formed between the cylindrical tube (4) and the direction of the road is preferably from 15° to 75°.

6. Device according to Claims 1 to 5, characterized in that the cylindrical tube (4) is buried in a material (16) suitable for transmitting the forces that are applied to it.

7. Device according to Claim 6, characterized in that the material (16) is resin.

## Patentansprüche

1. Messinstrument zum Messen der Fläche einer Rollzone auf einem Weg, mit einem auf Druck ansprechenden Geber (14), der im Weg unterhalb und nahe der Rollzone des Fahrzeuges eingebettet und mit elektrischen Meßkreisen (20) verbunden ist, **dadurch gekennzeichnet,** daß der Geber (14) in einem zylindrischen Rohr (4) mit nicht verformbaren Wänden angeordnet ist, wobei das Rohr (4) in bezug auf die Richtung des Weges schräg verläuft und die Wand (6) des Rohres Ausnehmungen (8) aufweist, die auf der der Rollfläche ausgesetzten Seite (10) verteilt sind, und daß ferner die elektrischen Meßkreise (20) elektrische Impulszähler (24) sind.

2. Instrument nach Anspruch 1, **dadurch gekennzeichnet,** daß die Ausnehmungen (8) wenigstens örtlich periodisch verteilt sind.

3. Instrument nach den Ansprüchen 1 und 2, **dadurch gekennzeichnet,** daß die periodischen Ausnehmungen (8) eine halbkreisförmige Form aufweisen.

4. Instrument nach den Ansprüchen 1 bis 3, **dadurch gekennzeichnet,** daß der Winkel A zwischen dem zylindrischen Rohr (4) und der Richtung des Weges zwischen $5^{\circ}$ und $85^{\circ}$ beträgt.

5. Instrument nach den Ansprüchen 1 bis 4, **dadurch gekennzeichnet,** daß der Winkel A zwischen dem zylindrischen Rohr (4) und der Richtung des Weges vorzugsweise zwischen $15^{\circ}$ und $75^{\circ}$ beträgt.

6. Instrument nach den Ansprüchen 1 bis 5, **dadurch gekennzeichnet,** daß das zylindrische Rohr (4) in einem Material (16) eingebettet ist, das zur Übertragung der aufgebrachten Beanspruchungen fähig ist.

7. Instrument nach Anspruch 6, **dadurch gekennzeichnet,** daß das Material (16) ein Harz ist.

## FIG. 1

## FIG. 2

## FIG. 3